# EUROPEAN PATENT APPLICATION

(11) **EP 2 221 460 A1**
(43) Date of publication of application: **25.08.2010**
(21) Application number: 10153184.6
(22) Date of filing: 10.02.2010
(51) Int. Cl.: F01N 3/20, F01N 3/28

(54) **Exhaust gas purification apparatus**

(30) Priority: 18.02.2009 JP 2009035593
(71) Applicant: Kabushiki Kaisha Toyota Jidoshokki, Kariya-shi, Aichi 448-8671 (JP)
(72) Inventor: Yoshida, Koji, Kariya-shi Aichi 448-8671 (JP)
(74) Representative: TBK-Patent

(57) **Abstract**

An exhaust gas purification apparatus includes a catalyst carrier which has a body and a catalyst supported on the body, and an electrically conducting device for conducting an electric current to the body. A part of the body is at least made of a conductive nonmetal.

## Description

### BACKGROUND OF THE INVENTION

The present invention relates to an exhaust gas purification apparatus and, more specifically, to an exhaust gas purification apparatus for raising the temperature of a catalyst forming a part of the apparatus.

Urea Selective Catalytic Reduction (hereinafter simply referred to as SCR) has been developed for decreasing the content of nitrogen oxides (NOx) in exhaust gas of a diesel engine. The SCR includes an oxidation catalyst for oxidizing nitrogen monoxide (NO) to nitrogen dioxide (NO2), an SCR catalyst that is provided downstream of the oxidation catalyst for converting NOx into nitrogen and H2O by chemical reaction between NOx and ammonia generated by reacting urea with H2O, a urea supply device for supplying urea to the SCR catalyst, and an oxidation catalyst that is provided downstream of the SCR catalyst for oxidizing residual ammonia remaining after the above chemical reaction through the SCR catalyst.

The oxidation catalyst and the SCR catalyst function sufficiently as a catalyst when the temperature is higher than a certain level, but the catalytic performance degrades significantly when the temperature is lower than the certain level. Therefore, when the temperature is low, for example, at a start-up of the engine and the catalytic performance is not sufficient, the temperature of the catalyst should be raised. Japanese Utility Model Application Publication No. 49-36324 discloses a system in which an electric heater is provided upstream of the catalyst for heating the exhaust gas thereby to raise the temperature of the catalyst.

According to the system of the above Publication, however, the electric heater may be blown out by a break of wire which may be caused by excessive heating of the heater during operation when the flow of exhaust gas is low or by a short circuit due to attachment of particulate matters (PM) to the heater element.

The present invention is directed to providing an exhaust gas purification apparatus which solves the above problem by raising the catalyst temperature efficiently.

### SUMMARY OF THE INVENTION

An exhaust gas purification apparatus includes a catalyst carrier which has a body and a catalyst supported on the body, and an electrically conducting device for conducting an electric current to the body. A part of the body is at least made of a conductive nonmetal

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a schematic configuration diagram showing an exhaust gas purification apparatus according to a preferred embodiment of the present invention;
FIG. 2 is a detailed view of an SCR catalyst forming a part of the exhaust gas purification apparatus of FIG. 1;
FIG. 3 is a front view of a catalyst carrier of the SCR catalyst of FIG. 2 and a fragmentary partially enlarged view thereof; and
FIG. 4 is a schematic cross sectional view taken along the line IV-IV of FIG. 3.

### DETAILED DESCRIPTION OF THE PREFERRED EMBODIMENTS

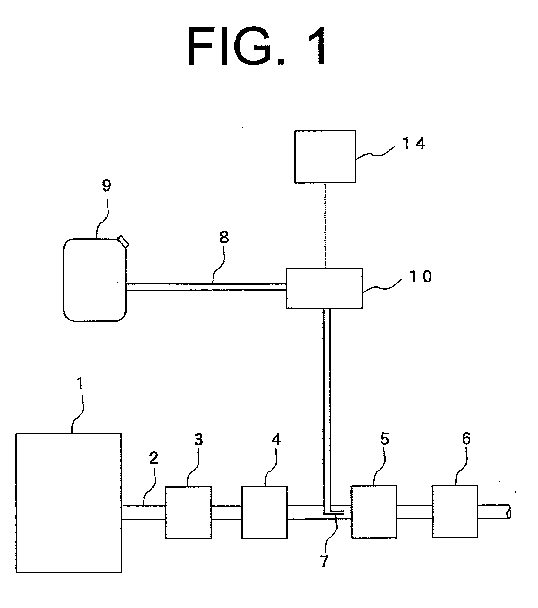

The following will describe the preferred embodiment of an exhaust gas purification apparatus according to the present invention with reference to FIGS. 1 through 4. Reference is made firstly to FIG. 1 showing the schematic configuration diagram of the exhaust gas purification apparatus according to the preferred embodiment of the present invention. Exhaust gas from a diesel engine 1 flows through an exhaust pipe 2. An oxidation catalyst 3, a diesel particulate filter (hereinafter referred to as DPF) 4, an SCR catalyst 5 and another oxidation catalyst 6 are provided in this order in the exhaust pipe 2. An injection nozzle 7 for injecting urea water is provided between the DPF 4 and the SCR catalyst 5 and connected through a piping 8 to a urea water tank 9 for reserving urea water. A urea water supply device 10 is provided in the piping 8 for supplying urea water in the urea water tank 9 to the injection nozzle 7 and also electrically connected to a control device, i.e., electronic control unit (hereinafter referred to as ECU) 14.

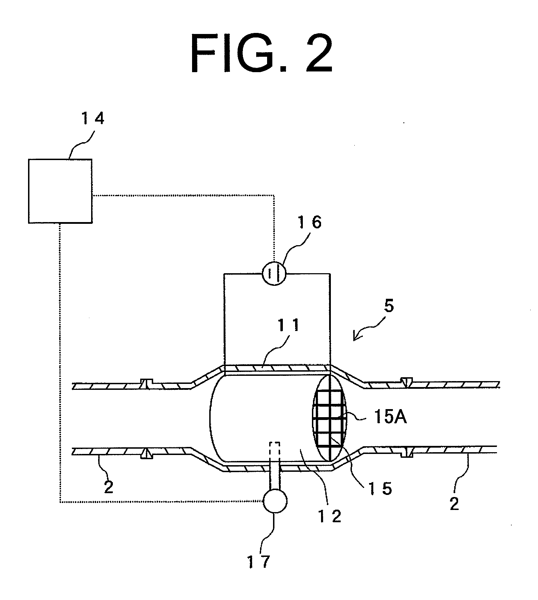

The SCR catalyst 5 which is shown in FIG. 2 has a converter case 11 1 and a column-shaped catalyst carrier 12 provided in the converter case 11. A pair of electrodes 15 are spaced apart each other and electrically connected to opposite ends of the catalyst carrier 12 in the SCR catalyst 5 (one electrode 15 being shown in FIG. 2) and electrically connected to an electric power supply 16. The electrodes 15 and the electric power supply 16 form an electrically conducting device. The electrically conducting device conducts an electric current to the catalyst carrier 12. Each electrode 15 is made in the form of a mesh of a plurality of long and thin electrode bars 15A. The catalyst carrier 12 is provided with a temperature sensor 17 for measuring the temperature inside the catalyst carrier 12. The electric power supply 16 and the temperature sensor 17 are electrically connected to the ECU 14.

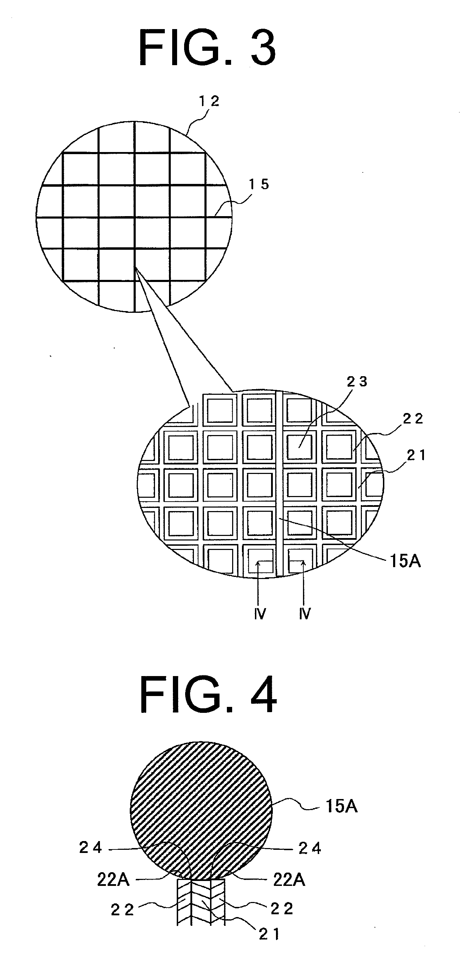

As shown in FIG. 3, the catalyst carrier 12 has a base 21 made of carbon as a frame of the catalyst carrier 12 and a film 22 made of silicon carbide (SiC) and formed on the surface of the base 21 by sintering or atmospheric CVD. A plurality of holes 23 whose cross section is square are formed through the column-shaped base 21 in an axial direction of the base 21. The film 22 supports the selective reduction catalyst.

As shown in FIG. 4, each electrode bar 15A forming the electrode 15 is connected to the film 22 in such a way that the electrode bar 15A and the end surface 22A of the film 22 are in point contact with each other as viewed in their cross sections. In other words, the contact portion 24 between each electrode bar 15A and the film 22 extends linearly along axial direction of the electrode bar 15A. Such contact portion 24 extending linearly permits a larger current to flow as compared with a case where the electrode 15 is connected to the film 22 in point contact. When the electrode bar 15A is curved, the contact portion 24 fails to extend linearly, but extend continuously along the curved electrode bar 15A.

The structure of the oxidation catalysts 3 and 6 is substantially the same as that of the SCR catalyst 5 which is shown in FIGS. 2 through 4. Each of the oxidation catalysts 3 and 6 also has a pair of electrodes provided on opposite ends of the catalyst carrier, an electric power supply connected to the pair of electrodes and a temperature sensor for measuring the temperature inside the catalyst carrier.

The following will describe the operation of the exhaust gas purification apparatus according to the embodiment. When the diesel engine 1 is just started or idling, the temperature of the exhaust gas of the diesel engine 1 is low. Therefore, when such exhaust gas flows through the oxidation catalysts 3, 6 and the SCR catalyst 5, the temperature of each catalyst will not be raised high enough for the catalyst to exert its function until a predetermined time passes after a start-up of the diesel engine 1.

The following will describe the operation for raising the temperature of the SCR catalyst 5. If the temperature measured by the temperature sensor 17 is lower than a temperature predetermined by the ECU 14 when a predetermined time has passed after the diesel engine 1 was started, the ECU 14 activates the electric power supply 16 to conduct electric current to the film 22. Accordingly, the temperature of the film 22 is raised by the resistance heating of the SiC forming the film 22, with the result that the temperature of the selective reduction catalyst supported by the film 22 is increased.

If the temperature measured by the temperature sensor 17 exceeds the above predetermined temperature, the ECU 14 turns off the electric power supply 16. Accordingly, the temperature of the film 22 will not be raised because the electric current is not conducted to the film 22. Thereafter, the temperature of the selective reduction catalyst supported by the film 22 is maintained properly by the on/off control of the electric power supply 16 in which the ECU 14 turns on or off the electric power supply 16 in response to the temperature detected by the temperature sensor 17. Similarly, the temperatures of the oxidation catalysts 3, 6 are also maintained properly in the same manner as the temperature of the SCR catalyst 5.

At such temperature of the oxidation catalysts 3, 6 and the SCR catalyst 5, NO in the exhaust gas is oxidized to NO2 by the exhaust gas flowing through the oxidation catalyst 3. Subsequently, PM in the exhaust gas is then trapped by the DPF 4 when the exhaust gas flows through the DPF 4. The ECU 14 activates the urea water supply device 10 at appropriate timing, so that urea water is supplied from the urea water tank 9 to the injection nozzle 7 through the piping 8 and then the urea water is delivered to the SCR catalyst 5 through the injection nozzle 7. The urea water delivered to the SCR catalyst 5 is hydrolyzed into ammonia and carbon dioxide and the generated ammonia react with NOx in the exhaust gas thereby to produce nitrogen and water. The residual ammonia in the SCR catalyst 5 remaining after the above reaction is oxidized in the oxidation catalyst 6. Thus, NOx is removed and purified exhaust gas is emitted to the atmosphere.

As previously described, the on/off control of the electric power supply 16 begins when a predetermined time has passed after a start-up of the diesel engine 1. This is because, when the diesel engine 1 is just started, the temperature of the SCR catalyst 5 is approximately the same as outside air temperature and much lower than a temperature for the SCR catalyst 5 to perform sufficiently as a catalyst. It takes a long time to raise to the temperature to a desired level for the SCR catalyst 5 when the SCR catalyst 5 is heated only by the resistance heating of the SiC. It is advantageous in terms of energy consumption that the temperature of the SCR catalyst 5 should be raised by the resistance heating of the SiC after a predetermined time has passed after the start-up of the diesel engine 1, i.e. after the SCR catalyst 5 has been preheated by the raised temperature of the exhaust gas. Therefore, the on/off control of the electric power supply 16 is not started until the hot exhaust gas reaches the SCR catalyst 5 after the start-up of the diesel engine 1. The on/off control of the electric power supply 16 begins after the predetermined time, which is determined by the ECU 14 based on the information, such as the performance of the battery used, the ambient temperature and the operating condition of the diesel engine 1.

Thus, the temperature of the catalyst can be raised efficiently because the temperature of the selective reduction catalyst supported on the film 22 is raised by the resistance heating of SiC when electric current is conducted to the film 22 made of SiC.

The catalyst carrier 12 of the above embodiment includes the base 21 made of carbon and the film 22 made of SiC and formed on the surface of the base 21, but the present invention is not limited to this structure. Instead of being formed of two different elements, i.e., the base 21 and the film 22, the catalyst carrier 12 may be formed integrally into a body made only of SiC. The material of the film 22 is not limited to SiC, but may be carbon or a combination of any conductive nonmetals. Though the base 21 and the film 22 are both made of conductive nonmetals in the embodiment, the base 21 may be of any material as long as the film 22 is of a conductive nonmetal.

The electrode 15 is made in the form of a mesh of a plurality of long and thin electrode bars 15A in the embodiment. The present invention is not limited to this structure. As long as the electrode 15 and the film 22 are not connected at one contact point, that is very small area, it may be of any structure. The electrode 15 may have a planar shape so that the contact portion 24 has a certain area. For example, the electrode 15 may have a planar shape and portions corresponding to the holes 23 of the catalyst carrier 12 may be formed into holes by punching or the electrode 15 may have a shape so as to connect to the film 22 by a plurality of contact points. The contact portion 24 may have a single linear or a single planar shape. That is, the contact portion 24 is equivalent to an aggregate of a plurality of small contact points between the electrode 15 and the film 22. According to the present invention, the contact portion 24 has a single linear or a single planar shape, which means that the electrode 15 and the film 22 are connected each other by "a plurality of contact points", in other words, the contact portion 24 has a plurality of contact points. The contact portion 24 may have a curved line or a curved surface.

The temperature sensor 17 of the above embodiment is adapted to measure the temperature inside the catalyst carrier 12 directly, but the present invention in not limited to this structure. The temperature sensor 17 may be provided anywhere in the exhaust pipe 2 so that it estimates the temperature of the catalyst carrier 12 by measuring the temperature of the exhaust gas flowing through the exhaust pipe 2.

The contact portion 24 between the electrode 15 and the film 22 has a plurality of contact points in the embodiment, but the electrode 15 and the film 22 may be connected only at one contact point. Also, in the above embodiment, the on/off control of the electric power supply 16 begins when a predetermined time has passed after the diesel engine 1 was started. However, the on/off control of the electric power supply 16 may begin as soon as the diesel engine 1 is started.

An exhaust gas purification apparatus includes a catalyst carrier which has a body and a catalyst supported on the body, and an electrically conducting device for conducting an electric current to the body. A part of the body is at least made of a conductive nonmetal.

## Claims

1. An exhaust gas purification apparatus,
**characterized in that** the exhaust gas purification apparatus includes
a catalyst carrier (12) having a body (21, 22) and a catalyst supported on the body, wherein a part of the body is at least made of a conductive nonmetal; and
an electrically conducting device (15, 16) for conducting an electric current to the body.

2. The exhaust gas purification apparatus according to claim 1,
**characterized in that** the body includes
a base (21) forming a frame of the catalyst carrier; and
a film (22) supporting the catalyst, wherein the film is made of a conductive nonmetal and formed on the surface of the base.

3. The exhaust gas purification apparatus according to claim 2,
**characterized in that** the base is made of a conductive nonmetal.

4. The exhaust gas purification apparatus according to any one of claims 2 and 3,
wherein the base is a column-shaped object and a plurality of holes (23) whose cross section is square are formed through the base in an axial direction of the base.

5. The exhaust gas purification apparatus according to claim 4,
wherein the electrically conducting device is made in the form of a mesh of a plurality of electrode bars (15A) and electrically connected to the film at opposite ends of the column-shaped base.

6. The exhaust gas purification apparatus according to any one of claims 1 through 5, **characterized in that** the electrically conducting device includes:
a pair of electrodes (15), which are spaced apart each other and electrically contacts with the body at contact portions (24), respectively, wherein the contact portion has a plurality of contact points.

7. The exhaust gas purification apparatus according to any one of claims 1 through 6,
**characterized in that** the exhaust gas purification apparatus further includes
a temperature sensor (17) for measuring the temperature inside the catalyst carrier; and
a control device (14) for turning on or off the electrically conducting device in response to the temperature measured by the temperature sensor.

8. The exhaust gas purification apparatus according to any one of claims 1 through 7,
**characterized in that** the conductive nonmetal is made of carbon, silicon carbide or a combination thereof.

9. The exhaust gas purification apparatus according to claim 7,
**characterized in that** the control device begins to turn on or off the electrically conducting device after a period of time which exhaust gas from an engine reached the catalyst carrier at a start-up of the engine has passed.

10. The exhaust emission purification apparatus according to claim 6,
**characterized in that** the contact portion has a linear shape or a planar shape or a curved line or a curved surface.

## Amended claims

### Amended claims in accordance with Rule 137(2) EPC.

**1.** An exhaust gas purification apparatus comprising
a catalyst carrier (12) having a body (21, 22) and a catalyst supported on the body, wherein the body includes
a base (21) forming a frame of the catalyst carrier, and
a film (22) supporting the catalyst, wherein the film is formed on the surface of the base and wherein
the base is a column-shaped object and a plurality of holes (23) whose cross section is square are formed through the base in an axial direction of the base,
an electrically conducting device (15, 16) for conducting an electric current to the body
**characterized in that**
the film and a part of the body is at least made of a conductive nonmetal, and
the electrically conducting device is made in the form of a mesh of a plurality of electrode bars (15A) and electrically connected to the film at opposite ends of the column-shaped base.

**2.** The exhaust gas purification apparatus according to claim 1,
**characterized in that** the base is made of a conductive nonmetal.

**3.** The exhaust gas purification apparatus according to any one of claims 1 or 2,
**characterized in that** the electrically conducting device includes:
a pair of electrodes (15), which are spaced apart each other and electrically contacts with the body at contact portions (24), respectively, wherein the contact portion has a plurality of contact points.

**4.** The exhaust gas purification apparatus according to any one of claims 1 through 3,
**characterized in that** the exhaust gas purification apparatus further includes
a temperature sensor (17) for measuring the temperature inside the catalyst carrier; and
a control device (14) for turning on or off the electrically conducting device in response to the temperature measured by the temperature sensor.

**5.** The exhaust gas purification apparatus according to any one of claims 1 through 4,
**characterized in that** the conductive nonmetal is made of carbon, silicon carbide or a combination thereof.

**6.** The exhaust gas purification apparatus according to claim 4,
**characterized in that** the control device begins to turn on or off the electrically conducting device after a period of time which exhaust gas from an engine reached the catalyst carrier at a start-up of the engine has passed.

**7.** The exhaust emission purification apparatus according to claim 3,
**characterized in that** the contact portion has a linear shape or a planar shape or a curved line or a curved surface.
